## Europäisches Patentamt

## European Patent Office

## Office européen des brevets

(19)

(11) Veröffentlichungsnummer: **0 249 959**
**B1**

(12) **EUROPÄISCHE PATENTSCHRIFT**

(45) Veröffentlichungstag der Patentschrift:
**07.06.89**

(21) Anmeldenummer: **87108690.6**

(22) Anmeldetag: **16.06.87**

(51) Int. Cl.⁴: **C21C 5/44**, C04B 35/02

(54) Feuerfeste Masse für feuerfeste Auskleidungen von metallurgischen Gefässen.

(30) Priorität: **19.06.86 DE 3620473**

(43) Veröffentlichungstag der Anmeldung:
**23.12.87 Patentblatt 87/52**

(45) Bekanntmachung des Hinweises auf die Patenterteilung:
**07.06.89 Patentblatt 89/23**

(84) Benannte Vertragsstaaten:
**AT BE DE FR GB IT LU NL**

(56) Entgegenhaltungen:
**EP-A- 0 139 311**
**DD-A- 96 257**
**DE-A- 1 571 411**
**DE-B- 2 723 792**

(73) Patentinhaber: **Dolomitwerke GmbH, Wilhelmstrasse 77, Wülfrath(DE)**

(72) Erfinder: **Chmiel, Max, Dipl.-Ing., Homertstrasse 11, D-5800 Hagen 8(DE)**
Erfinder: **Prange, Rainer, Dr.-Ing., In der Asmecke 17, D-5800 Hagen 8(DE)**

**Beschreibung**

Die Erfindung betrifft eine feuerfeste Masse für feuerfeste Auskleidungen von metallurgischen Gefäßen, bestehend aus

a) Sinteroxidkörnungen auf der Basis von Magnesiumoxid oder Dolomit oder Kalziumoxid oder Mischungen daraus,
b) einem organischen Bindemittel und
c) 0 bis 20 Gewichtsteilen eines feinteiligen Kohlenstoffträgers auf 100 Gewichtsteile Sinteroxid.

Für die Auskleidung von metallurgischen Gefäßen, z. B. Lichtbogenöfen, Konverter und Pfannen werden meistens pechgebundene Massen und Formkörper auf der Basis von Magnesiumoxid, Dolomit oder Mischungen daraus verwendet. Aus pechgebundenen Massen hergestellte Formkörper haben den Nachteil, daß sie während des ersten Aufheizens im Temperaturbereich von etwa 200 bis 500° C einen deutlichen Festigkeitsabfall aufweisen, der sich beim Praxiseinsatz nachteilig auswirken kann. Während des Aufheizens verringert sich zunächst die Viskosität des Bindemittels. Um den dadurch bedingten Festigkeitsabfall zu vermindern oder gänzlich auszuschalten, sind schon mehrere Vorschläge gemacht worden, die jedoch bisher mit bestimmten Nachteilen verbunden waren.

Nach DE-OS 15 71 411 kann man eine Temperaturbehandlung der geformten Produkte bei Temperaturen zwischen 200 und 450° C durchführen. Nachteilig ist dabei, daß bei Temperaturen unter 350° C die erforderliche Temperzeit stark zunimmt. Andere Vorschläge sehen Zusätze von verkokungsfördernden Verbindungen zur pechhaltigen Mischung vor, deren Hauptaufgabe darin besteht, die Polymerisation des Peches bereits bei niedrigen Temperaturen einzuleiten, wobei dessen Viskosität stark ansteigt. Dadurch wird der Festigkeitsabfall im feuerfesten Stein im unteren Temperaturbereich vermindert. Verkokungsfördernde Zusätze sind Schwefel oder schwefelhaltige Verbindungen, Oxidationsmittel, wie z. B. anorganische Nitrate oder organische Nitroverbindungen, chlorierte Aromate oder Lewissäuren wie z. B. $AlCl_3$, $ZnCl_2$. Diese Verbindungen besitzen den Nachteil, daß beim Aufheizen der feuerfesten Auskleidung flüchtige Bestandteile oder Zersetzungsprodukte freigesetzt werden, die nur mit erheblichem Aufwand aufgefangen und schadlos beseitigt werden können. In einigen Fällen verbleiben unerwünschte Rückstände im feuerfesten Erzeugnis, die die Haltbarkeit nachteilig beeinflussen.

Eine weitere Möglichkeit zur Verminderung des Festigkeitsabfalls bei ungebrannten, basischen Steinen besteht in der Verwendung von wärmehärtenden Kunstharzen oder deren Mischungen mit Pech als Bindemittel. Wärmehärtende Kunstharze sind aber im Vergleich zum Pech erheblich teurer, so daß ihr Einsatz aus Kostengründen auf wenige Produkte beschränkt bleiben muß.

Es bestand daher die Aufgabe, eine feuerfeste Masse der eingangs genannten Art sowie feuerfeste Formkörper bereitzustellen, mit denen feuerfeste Auskleidungen erhalten werden, die auch im unteren Temperaturbereich bis 350° C erhöhte Warmdruckfestigkeit aufweisen.

Die Aufgabe wird dadurch gelöst, daß das organische Bindemittel einen Gehalt an einer carbomethoxi-substituierte Oligophenyle und carbomethoxi-substituierte Benzylester enthaltenden Mischung hat, die bei der Herstellung von Dimethylterephthalat als Rückstand entsteht. Vorteilhaft ist es, wenn 0,5 bis 10 Gewichtsteile des Rückstandes aus der Herstellung von Dimethylterephthalat auf 100 Gewichtsteile an Sinteroxid enthalten sind. Unterhalb 0,5 Gewichtsteilen kann das Bindemittel keine ausreichende Wirkung entfalten. Bei einem Anteil von mehr als 10 Gewichtsteilen erweist sich nicht nur die Menge an flüchtigen Bestandteilen als nachteilig, sondern die Masse erhält auch eine Konsistenz, die die weitere Verarbeitung erschwert.

Eine weitere Ausgestaltung der Erfindung besteht darin, daß zusätzlich 1,5 bis 9,5 Gewichtsteile Pech, Bitumen und/oder Kunstharze auf 100 Gewichtsteile der Gesamtheit an Feuerfestoxiden und Bindemittel enthalten sind, um ggf. den Restkohlenstoffgehalt anzuheben. Als weitere Zusätze können Alkohole und Amine enthalten sein, die als Netzhilfsmittel wirken.

Die Erfindung betrifft weiterhin die Verwendung der erfindungsgemäßen Masse zur Herstellung von gepreßten Formkörpern. Mit diesen sogenannten "grünen" Steinen können ohne weitere Nachbehandlung metallurgische Gefäße ausgemauert werden. Es ist selbstverständlich auch möglich, daß diese Steine nach der Formgebung einer Temperaturbehandlung bei 250 bis 300° C unterworfen werden, wobei der größte Anteil der flüchtigen Bestandteile abgetrieben wird, oder die Steine oberhalb 1200° C zu brennen.

Ausführungsbeispiele

Die in der nachfolgenden Tabelle enthaltenen Beispiele wurden unter Verwendung von Haldener Sinterdolomit, handelsüblichem Sintermagnesit bzw. Sinterkalk aus einem halbtechnischen Brennversuch hergestellt. Die Sinterkörnungen wurden durch Brechen und Klassieren hergestellt. Die maximale Korngröße betrug in allen Fällen 5 mm im Durchmesser. Das Sintermaterial für Feinkorn/Mehlbereich wurde in einer Kugelmühle gemahlen und besteht aus der Fraktion 0 bis 0,3 mm mit einem Anteil von ca. 60 % kleiner 90 µm.

Zur Kohlenstoffanreicherung wurde für einige der Ausführungsbeispiele handelsüblicher Flammruß bzw. makrokristalliner Naturgraphit mit 85 % Kohlenstoff und Teilchengrößen kleiner 150 µm verwendet.

Das eingesetzte Bindemittel wird durch nachfolgende Übersicht charakterisiert:

DMT-Rückstand

| DMT-Rückstand | |
|---|---|
| Erweichungspunkt (K & S), °C | 50 |
| Dichte bei 130°C, g/cm$^3$ | 1,195 |
| Viskosität bei 120°C, mPas | 1000 |
| Koksrückstand nach Conradson, % | 23 |
| Carbomethoxi-substituierte Oligphenyle, ca. | 87% |
| Carbomethoxi-substituierte Benzylester, ca. | 7% |
| Dimethylterephthalat, ca. | 2% |
| Benzoesäuremethylester, ca. | 4% |
| | 100% |

Zum Vergleich wurden feuerfeste Massen herangezogen, die als organisches Bindemittel Bindepech oder Kunstharz vom Novolak-Typ enthalten.

Die auf 130° C vorgewärmten Körnungen wurden in einem Zwangsmischer mit ebenfalls vorgewärmtem Bindemittel versetzt und intensiv gemischt. Danach wurden die Feinanteile zugesetzt und bis zum Erreichen einer homogenen Mischung weiter gemischt. Die erhaltene heiße Mischung wurde unmittelbar nach Herstellung auf einer ölhydraulischen Presse zu Normalsteinen oder normalsteinähnlichen Formaten geformt, wobei ein Preßdruck von 120 N/mm2 aufgewendet wurde.

Für einige Ausführungsbeispiele wurden am erkalteten Grünstein die Prüfwerte bestimmt. Je ein Steinexemplar pro Anwendungsbeispiel wurde 2 h bei 300° C in einem Wärmeschrank getempert und anschließend die in der Tabelle angegebenen Prüfwerte bestimmt. Für die Verkokung bei 1000° C wurden Prüfkörper von den bei 300° C getemperten Steinen entnommen.

Die Prüfwerte wurden an normgerechten Prüfzylindern der Abmessungen 50 x 50 mm, die aus den Steinen ausgebohrt wurden, bestimmt. Die Bestimmungsmethoden für Rohdichte, KDF, WDF und Restkohlenstoff entsprechen den in der Feuerfestindustrie üblichen Prüfungen.

Tabelle

Zusammensetzung feuerfester Massen und Eigenschaften von daraus hergstellten Formkörpern

1. Sinteroxidkörnung auf Basis von Sinterdolomit

| Beispiele Nr. | Vergleich 1.0 | nach Erfindung 1.1 | 1.2 | 1.3 |
|---|---|---|---|---|
| Bindemittel, Massenanteil in % | | | | |
| DMT-Rückstand | – | 4,0 | 4,5 | 1,8 |
| Bindepech | 4,5 | – | – | 2,7 |
| Rußzusatz in % | – | – | 1,25 | 1,0 |
| Prüfwerte, Grünstein | | | | |
| Rohdichte, $g/cm^3$ | 2,98 | 2,99 | 3,00 | 2,86 |
| KDF, $N/mm^2$ | 45,0 | 30,2 | 68,0 | 35,1 |
| WDF, $N/mm^2$ | | | | |
| 200°C | 0,4 | 4,0 | 2,5 | 2,1 |
| 300°C | 0,4 | 32,8 | 31,0 | 10,2 |
| 400°C | 1,0 | 22,1 | 44,0 | 10,8 |
| Prüfwerte bei 300°C getemperter Stein | | | | |
| Rohdichte, $g/cm^3$ | 2,96 | 2,96 | 2,98 | 2,84 |
| KDF, $N/mm^2$ | 39,6 | 23,7 | 67,3 | 34,2 |
| WDF, $N/mm^2$ | | | | |
| 200°C | 0,7 | 20,3 | 55,6 | 13,1 |
| 300°C | 1,9 | 17,7 | 49,2 | 11,3 |
| 400°C | 2,7 | 24,3 | 46,7 | 11,0 |
| Prüfwerte nach Verkoken 1000°C | | | | |
| Rohdichte, $g/cm^3$ | 2,86 | 2,85 | 2,86 | 2,77 |
| KDF, $N/mm^2$ | 32,4 | 20,3 | 56,0 | 36,7 |
| Restkohlenstoff, % | 1,9 | 0,9 | 2,0 | 2,2 |

2. Sinteroxidkörnung auf Basis Sintermagnesit

| Beispiele Nr. | Vergleich 2.0 | nach Erfindung | | |
|---|---|---|---|---|
| | | 2.1 | 2.2 | 2.3 |
| Bindemittel, Massenanteil in % | | | | |
| DMT-Rückstand | – | 3,5 | 2,1 | 1,75 |
| Bindepech | 3,5 | – | 1,4 | – |
| Kunstharz | – | – | – | 1,75 |
| Rußzusatz in % | 2,5 | 2,5 | 2,5 | 2,5 |
| Prüfwerte, Grünstein | | | | |
| Rohdichte, g/cm$^3$ | 3,08 | 3,07 | 3,06 | 3,06 |
| KDF, N/mm$^2$ | 45,6 | 60,8 | 59,4 | 60,2 |
| WDF, N/mm$^2$ | | | | |
| 200°C | 1,2 | 3,5 | 2,8 | 10,4 |
| 300°C | 1,5 | 8,0 | 8,7 | 14,6 |
| 400°C | 1,4 | 45,2 | 26,3 | 51,8 |
| Prüfwerte bei 300°C getemperter Stein | | | | |
| Rohdichte, g/cm$^3$ | 3,06 | 3,05 | 3,04 | 3,08 |
| KDF, N/mm$^2$ | 50,4 | 63,2 | 54,2 | 66,6 |
| WDF, N/mm$^2$ | | | | |
| 200°C | 5,9 | 15,1 | 10,3 | 17,6 |
| 300°C | 2,4 | 12,0 | 9,1 | 15,6 |
| 400°C | 2,0 | 51,4 | 29,1 | 50,5 |
| Prüfwerte nach Verkoken 1000°C | | | | |
| Rohdichte, g/cm$^3$ | 3,00 | 3,00 | 3,00 | 3,03 |
| KDF, N/mm$^2$ | 46,6 | 63,6 | 50,4 | 36,2 |
| Restkohlenstoff, % | 4,3 | 3,1 | 3,8 | 3,3 |

### 3. Sinteroxidkörnung auf Basis Sintermagnesit und Zusatz von Graphit

| Beispiele Nr. | Vergleich 3.0 | nach Erfindung 3.1 |
|---|---|---|
| Bindemittel, Massenanteil in % | | |
| DMT-Rückstand | – | 4,5 |
| Bindepech | 4,5 | – |
| Graphitzusatz in % | 15 | 15 |
| Prüfwerte, Grünstein | | |
| Rohdichte, g/cm$^3$ | 2,93 | 2,94 |
| KDF, N/mm$^2$ | 18,2 | 24,6 |
| WDF, N/mm$^2$ | | |
| 200°C | 0,5 | 2,0 |
| 300°C | 0,3 | 7,0 |
| 400°C | 0,6 | 8,5 |
| Prüfwerte bei 300°C getemperter Stein | | |
| Rohdichte, g/cm$^3$ | 2,94 | 2,96 |
| KDF, N/mm$^2$ | 20,3 | 25,3 |
| WDF, N/mm$^2$ | | |
| 200°C | 4,3 | 14,7 |
| 300°C | 1,2 | 8,2 |
| 400°C | 2,5 | 10,8 |
| Prüfwerte nach Verkoken 1000°C | | |
| Rohdichte, g/cm$^3$ | 2,90 | 2,89 |
| KDF, N/mm$^2$ | 25,7 | 32,8 |
| Restkohlenstoff, % | 12,5 | 12,0 |

### 4. Sinteroxidkörnung auf Basis Sinterkalk

| Beispiele<br>Nr. | Vergleich<br>4.0 | nach Erfindung<br>4.1 |
|---|---|---|
| **Bindemittel, Massenanteil in %** | | |
| DMT-Rückstand | – | 4,5 |
| Bindepech | 4,5 | – |
| **Prüfwerte, Grünstein** | | |
| Rohdichte, g/cm$^3$ | 2,70 | 2,72 |
| KDF, N/mm$^2$ | 41,3 | 40,6 |
| WDF, N/mm$^2$ | | |
| 200°C | 0,9 | 6,8 |
| 300°C | 1,2 | 14,6 |
| 400°C | 1,1 | 20,2 |
| **Prüfwerte bei 300°C getemperter Stein** | | |
| Rohdichte, g/cm$^3$ | 2,96 | 2,67 |
| KDF, N/mm$^2$ | 45,7 | 50,5 |
| WDF, N/mm$^2$ | | |
| 200°C | 1,5 | 25,3 |
| 300°C | 2,6 | 12,6 |
| 400°C | 2,8 | 20,7 |
| **Prüfwerte nach Verkoken 1000°C** | | |
| Rohdichte, g/cm$^3$ | 2,58 | 2,57 |
| KDF, N/mm$^2$ | 25,6 | 22,8 |
| Restkohlenstoff, % | 1,8 | 1,0 |

## Patentansprüche

1. Feuerfeste Masse für feuerfeste Auskleidungen von metallurgischen Gefäßen, bestehend aus
a) Sinteroxidkörnungen auf der Basis von Magnesiumoxid oder Dolomit oder Kalziumoxid oder Mischungen daraus,
b) einem organischen Bindemittel und
c) 0 bis 20 Gewichtsteilen eines feinteiligen Kohlenstoffträgers auf 100 Gewichtsteile Sinteroxid, dadurch gekennzeichnet, daß das organische Bindemittel einen Gehalt an einer carbomethoxi-substituierte Oligophenyle und carbomethoxi-substituierte Benzylester enthaltenden Mischung hat, die bei der Herstellung von Dimethylterephthalat als Rückstand entsteht.

2. Feuerfeste Masse nach Anspruch 1, dadurch gekennzeichnet, daß 0,5 bis 10 Gewichtsteile des Rückstandes aus der Herstellung von Dimethylterephthalat auf 100 Gewichtsteile an Sinteroxid enthalten sind.

3. Feuerfeste Masse nach Anspruch 1 und 2, dadurch gekennzeichnet, daß zusätzlich 1,5 bis 9,5 Gewichtsteile Pech, Bitumen und/oder Kunstharze auf 100 Gewichtsteile der Gesamtheit an Feuerfestoxiden und Bindemittel enthalten sind.

4. Feuerfeste Masse nach Anspruch 1 bis 3, dadurch gekennzeichnet, daß zusätzlich Alkohole und Amine enthalten sind.

5. Verwendung einer feuerfesten Masse nach einem der Ansprüche 1 bis 4 zur Herstellung von gepreßten Formkörpern.

6. Gepreßter Formkörper mit der Zusammensetzung gemäß einem der Ansprüche 1 bis 4, dadurch gekennzeichnet, daß nach der Formgebung eine Temperaturbehandlung bei 250 bis 300° C oder oberhalb 1200° C erfolgt.

## Claims

1. Refractory mixture for refractory linings of metallurgical vessels comprising
a) sintered oxide grains using magnesium oxide or dolomite
or calcium oxide or mixtures thereof,

b) an organic binding agent and

c) 0 to 20 parts-by-wt of a fine-particled carbon carrier

per 100 parts-by-wt sintered oxide

characterised in that the organic binding agent contains a mixture which in turn contains carbomethoxy-substituted oligophenyls and carbomethoxy-substituted benzyl esters, and which is left as a residue when producing dimethyl terephthalate.

2. Refractory mixture according to claim 1, characterised in that 0.5 to 10 parts-by-wt of the residue deposited in the production of dimethyl terephthalate are contained in 100 parts-by wt sintered oxide.

3. Refractory mixture according to claims 1 and 2, characterised in that a further 1.5 to 9.5 parts-by-wt pitch, bitumen and/or synthetic resins are contained in 100 parts-by-wt of all the refractory oxides and binding agents.

4. Refractory mixture according to claims 1 to 3, characterised in that alcohols and amines are also contained therein.

5. Application of a refractory mixture according to one of the claims 1 to 4 for producing squeeze moulded pieces.

6. Squeeze moulded pieces composed according to one of the claims 1 to 4, characterised in that after the moulding, there is a temperature treatment at 250°C to 300°C or over 1200°C.

## Revendications

1. Mélange réfractaire pour des revêtements réfractaires de récipients métallurgiques consistant en:

a) des granulations d'oxyde de frittage à base d'oxyde de magnésium ou de dolomite ou d'oxyde de calcium ou de mélanges de ceux-ci,

b) un agent liant organique et

c) 0 à 20 parties en poids d'un support carboné en fines particules pour 100 parties en poids d'oxydes de frittage,

caractérisé en ce que l'agent liant organique a une teneur en un mélange qui contient des oligophényle substitués par un carbométhoxy et d'ester benzylique substitué par un carbométhoxy qui se forme lors de la production de téréphthalate de diméthyle en tant que résidu.

2. Mélange réfractaire selon la revendication 1, caractérisé en ce que 0,5 à 10 parties en poids de résidu provenant de la production de téréphthalate de diméthyle sont contenues pour 100 parties en poids d'oxydes de frittage.

3. Mélange réfractaire selon la revendication 1 et 2, caractérisé en ce que additionnement 1,5 à 9,5 parties en poids de poix, de bitume et/ou de résine artificielle pour 100 parties en poids de la totalité en oxydes réfractaires et en agent liant sont contenues.

4. Mélange réfractaire selon les revendications 1 à 3, caractérisé en ce que additionnellement des alcools et des amines sont contenues.

5. Utilisation d'un mélange réfractaire selon l'une des revendications 1 à 4 pour l'obention de formes moulées comprimées.

6. Formes moulées comprimées ayant une composition selon l'une des revendications 1 à 4, caractérisées en ce que, après le façonnage, un traitement thermique à une température de 250 à 300°C ou au-dessus de 1200°C est effectué.